# DEMANDE DE BREVET EUROPEEN

(11) **EP 1 712 496 A1**
(43) Date de publication de la demande: **18.10.2006**
(21) Numéro de dépôt: 06290560.9
(22) Date de dépôt: 06.04.2006
(51) Int. Cl.: B65G 47/84, B65G 29/00, B67B 3/20

(54) **Dispositif de prehension d'un recipient avec maintien d'une partie epaulee de celui-ci**

(30) Priorité: 15.04.2005 FR 0503770
(71) Demandeur: SERAC GROUP, 72400 La Ferté-Bernard (FR)
(72) Inventeur: Brunee, Jacky, Helmi, TTDI 60 000 Kuala Lumpur (MY)
(74) Mandataire: Lavialle, Bruno François Stéphane

(57) **Abrégé**

Dispositif de préhension d'un récipient (1) comportant une partie épaulée (2) surmontée d'un goulot (3) ayant une collerette (4) en saillie, le dispositif comportant un élément support (11) présentant une ouverture latérale (12) pour recevoir une partie du goulot et former un appui pour la collerette, deux mâchoires (14, 15) étant montées mobiles par rapport à l'élément support pour assurer un maintien du récipient sur l'élément support, les mâchoires s'étendant sous l'élément support et comportent une surface inférieure (28, 29) d'appui sur la partie épaulée du récipient.

## Description

La présente invention concerne un dispositif de préhension de récipients qui est utilisable notamment dans les installations de bouchage de récipients. Les récipients plus particulièrement concernés comportent un corps possédant une partie épaulée surmontée d'un goulot ayant une collerette en saillie.

### ARRIERE PLAN DE L'INVENTION

Un dispositif de préhension de tels récipients comporte généralement un élément support présentant une ouverture latérale pour recevoir une partie du goulot et former un appui pour la collerette et deux mâchoires montées mobiles par rapport à l'élément support pour serrer le goulot ou la collerette afin de maintenir le récipient sur l'élément support. Ces dispositifs de préhension sont d'utilisation délicate notamment dans les installations de bouchage de récipients où l'espace disponible autour du goulot est relativement restreint pour ne pas gêner la mise en place du bouchon sur le goulot du récipient.

Pour les bouteilles en matière plastique, il est connu un dispositif de préhension comportant un élément support présentant une ouverture latérale pour recevoir une partie du goulot et une face supérieure en saillie de laquelle s'étendent des pointes ou des lames acérées pour mordre le dessous de la collerette. Un guide externe maintient le goulot dans l'ouverture latérale. Lors du vissage, la tête de vissage portant le bouchon est appliquée sur le goulot de manière à exercer sur le goulot un effort suffisant pour assurer la pénétration des pointes ou des lames dans la collerette et empêcher la rotation du récipient lors du vissage. Cependant, la pression exercée par la tête de vissage engendre une friction relativement importante du bouchon sur le goulot. Cette friction augmente le couple résistant au vissage du bouchon et est difficilement maîtrisable, rendant délicate l'obtention de couples de serrage homogènes.

### OBJET DE L'INVENTION

Un but de l'invention est de fournir un moyen simple permettant un maintien efficace du récipient sans agir sur la partie supérieure du goulot du récipient.

### BREVE DESCRIPTION DE L'INVENTION

A cet effet, on prévoit, selon l'invention, un dispositif de préhension d'un récipient comportant une partie épaulée surmontée d'un goulot ayant une collerette en saillie, le dispositif comportant un élément support présentant une ouverture latérale pour recevoir une partie du goulot et former un appui pour la collerette, deux mâchoires étant montées mobiles par rapport à l'élément support pour assurer un maintien du récipient sur l'élément support, les mâchoires s'étendant sous l'élément support et comportant une face inférieure d'appui sur la partie épaulée du récipient.

Ainsi, les mâchoires exercent sur la partie épaulée un effort tendant à appliquer la collerette sur l'élément support tout en maintenant le goulot dans l'ouverture latérale de l'élément support.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés parmi lesquels :
- la figure 1 est une vue partielle en perspective, avec écorché, d'une plate-forme équipée de dispositifs de préhension conformes à l'invention.
- la figure 2 est une vue éclatée en perspective d'un tel dispositif de préhension.

### DESCRIPTION DETAILLEE DE L'INVENTION

En référence aux figures, le dispositif de préhension qui va être décrit est destiné au maintien de récipients généralement désigné en 1, comportant une partie épaulée 2 surmontée d'un goulot 3 ayant une collerette 4 s'étendant en saillie.

Le dispositif de préhension, généralement désigné en 10, comprend un élément support 11, rigide, présentant une ouverture latérale 12 agencée pour recevoir la partie du goulot s'étendant sous la collerette, la collerette reposant sur une face supérieure 13 de l'élément support 11.

Le dispositif de préhension comprend également deux mâchoires, généralement désignées en 14, 15, reliées à l'élément support 11 par un axe d'articulation 16 de telle manière que les mâchoires 14, 15 s'étendent sous l'élément support et soient mobiles entre une position ouverte et une position fermée.

Chaque mâchoire 14, 15 a ici une forme recourbée et présente un logement inférieur 17, 18 pour recevoir une garniture 19, 20 ayant une surface 28, 29 en segment de tronc de cône destinée à former une surface inférieure de la mâchoire 14, 15. La garniture 19, 20 est retenue dans le logement inférieur 17, 18 par une plaque 21, 22 vissée sous la mâchoire 14, 15. La mâchoire 14 se prolonge au-delà de l'axe d'articulation 16 par un appendice 23 supportant un galet pivotant 24 d'axe parallèle à l'axe d'articulation 16 des mâchoires. Le galet pivotant 24 s'étend au-dessus de l'appendice 23. La plaque 22 de la mâchoire 15 se prolonge au-delà de l'axe d'articulation par un appendice 25 portant un galet pivotant 26 d'axe parallèle à l'axe d'articulation 16. Le galet pivotant 26 s'étend en-dessous de l'appendice 25.

Le dispositif de préhension comprend en outre un organe de rappel élastique des mâchoires en position ouverte. L'organe de rappel élastique est ici un ressort hélicoïdal de torsion 27 centré sur l'axe d'articulation 16 et ayant des portions d'extrémité solidaires des mâchoires 14, 15.

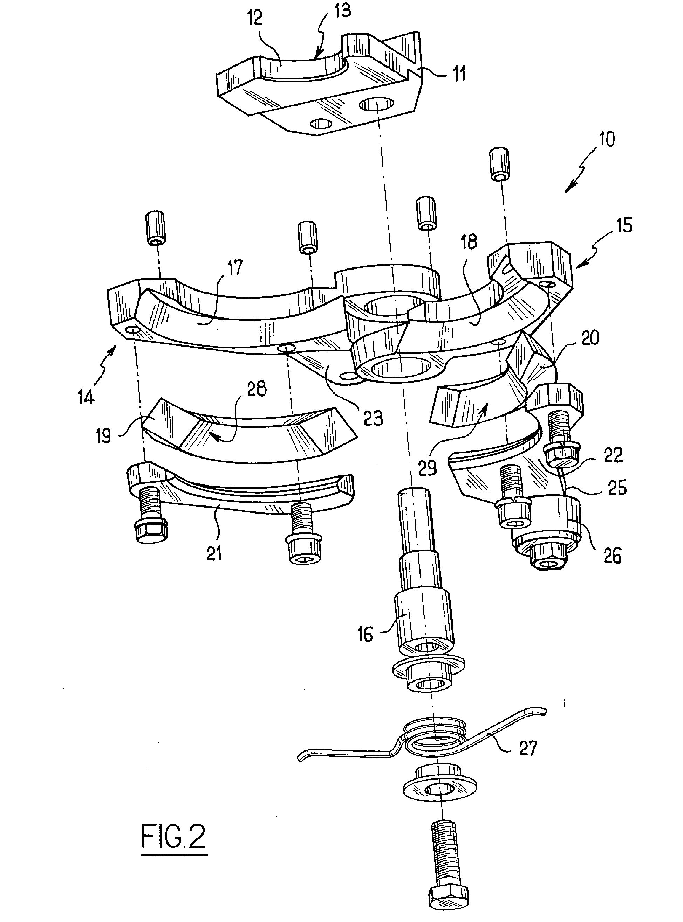

Il est représenté à la figure 2 une plate-forme 30 montée de façon connue en elle-même pour pivoter sur un bâti non représenté et pourvue d'une pluralité de dispositifs de préhension 10.

Les dispositifs de préhension 10 sont fixés sous la plate-forme 30 par l'axe d'articulation 16, l'élément support 11 étant immobilisé en rotation par rapport à la plate-forme.

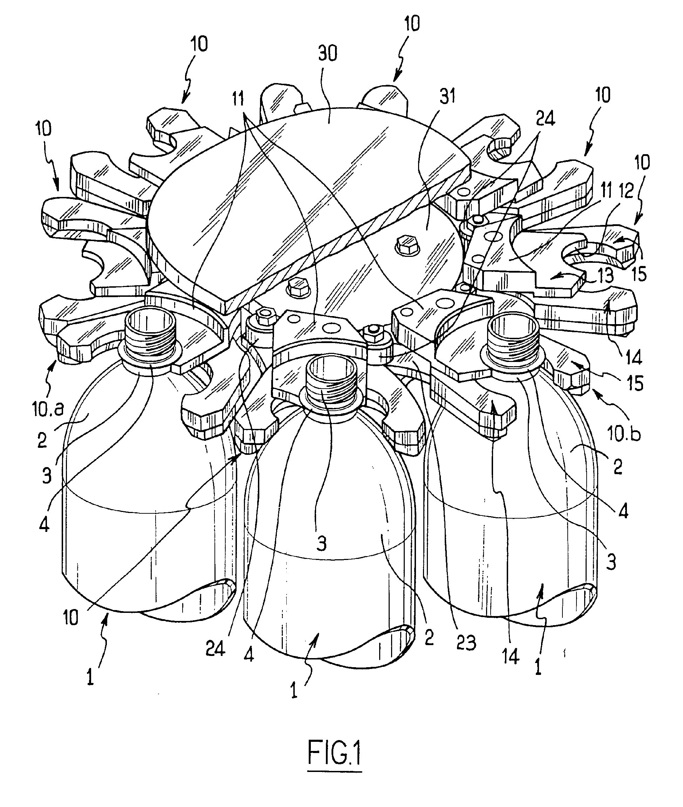

Une came 31 est fixée au bâti pour s'étendre sous la plate-forme. La came 31 comporte deux profils superposés pour coopérer respectivement avec les galets pivotants 24, 26 de manière à amener les mâchoires 14, 15 de leur position ouverte (visible à la figure 1 sur le dispositif de préhension 10 portant l'indice a) vers leur position fermée (visible à la figure 1 sur le dispositif de préhension 10 portant l'indice b).

Lorsque les mâchoires sont fermées, elles exercent sur la partie épaulée un effort dirigé vers le bas qui tend à appliquer la collerette 4 sur la face supérieure 13 de l'élément support 11. Les garnitures sont en un matériau relativement souple pour améliorer le contact des garnitures avec la partie épaulée et adhérant au matériau du récipient pour empêcher une rotation du récipient. Ceci est d'autant plus avantageux que la surface inférieure des mâchoires en contact avec la partie épaulée est grande, ce qui permet de limiter l'effort d'application de la collerette sur l'élément support. En outre, les extrémités des mâchoires prennent ici avantageusement appui sur la partie épaulée 2 d'un côté de celle-ci opposé à l'élément support 11, ce qui tend à pousser le goulot 3 dans l'ouverture latérale 12 de l'élément support 11.

On notera, en considérant un dispositif de préhension de la figure 1, que comme les galets 24, 26 sont disposés à des niveaux différents, le galet 24 du dispositif de préhension considéré se trouve au-dessus du galet 26 du dispositif de préhension adjacent à la mâchoire 14 du dispositif de préhension considéré tandis que, de l'autre côté, le galet 26 du dispositif de préhension considéré se trouve en dessous du galet 24 du dispositif de préhension adjacent à la mâchoire 15 du dispositif de préhension considéré. Il est ainsi possible de réaliser une plate-forme avec des dispositifs de préhension particulièrement rapprochés.

Bien entendu, l'invention n'est pas limitée au mode de réalisation décrit et on peut y apporter des variantes de réalisation sans sortir du cadre de l'invention tel que défini par les revendications.

En particulier, les mâchoires peuvent avoir des structures différentes de celles décrites. Ainsi, lorsque les dispositifs de préhension sont destinés à occuper des positions relativement espacées sur une plate-forme, les appendices supportant les galets pivotants peuvent être dans un même plan. De plus, les moyens de commande des mâchoires peuvent être autres qu'une came et comprendre un actionneur, tel qu'un vérin, associé à chaque dispositif de préhension.

En outre, les surfaces d'appui sur les parties épaulées peuvent être réalisées directement sur les mâchoires. Les surfaces d'appui peuvent avoir des formes différentes de celles décrites, ces formes favorisant l'application d'un effort vers le bas par les mâchoires sur la partie épaulée lors de la fermeture des mâchoires. Ces surfaces agissent comme une came sur la partie épaulée pour appliquer la collerette sur l'élément support.

De plus, des reliefs acérés peuvent être prévus sur la surface supérieure de l'élément support pour mordre dans la collerette du récipient sous l'effort exercé par les mâchoires. Les garnitures peuvent alors présenter un plus faible coefficient de frottement sur le récipient.

## Revendications

1. Dispositif de préhension d'un récipient (1) comportant une partie épaulée (2) surmontée d'un goulot (3) ayant une collerette (4) en saillie, le dispositif comportant un élément support (11) présentant une ouverture latérale (12) pour recevoir une partie du goulot et former un appui pour la collerette, deux mâchoires (14, 15) étant montées mobiles par rapport à l'élément support pour assurer un maintien du récipient sur l'élément support, **caractérisé en ce que** les mâchoires s'étendent sous l'élément support et comportent une surface inférieure (28, 29) d'appui sur la partie épaulée du récipient.

2. Dispositif selon la revendication 1, **caractérisé en ce que** la surface inférieure (28, 29) a une forme en segment de tronc de cône.

3. Dispositif selon la revendication 1, **caractérisé en ce que** la surface inférieure (28, 29) appartient à une garniture (19, 20) montée de façon amovible sur chaque mâchoire (14, 15).

4. Dispositif selon la revendication 1, **caractérisé en ce qu'**il comprend un moyen de rappel élastique (27) des mâchoires (14, 15) en position ouverte.

5. Dispositif selon la revendication 1, **caractérisé en ce que** les mâchoires (14, 15) sont reliées l'une à l'autre par un axe d'articulation (16) et se prolongent au-delà de cet axe d'articulation par des appendices (23, 25) desquels sont solidaires des galets (24, 26) pour coopérer avec au moins une came (31).

6. Dispositif selon la revendication 1, **caractérisé en ce que** la surface inférieure (28, 29) présente un coefficient de frottement suffisant pour permettre une immobilisation en rotation du récipient.
